# EUROPEAN PATENT APPLICATION

(11) **EP 1 780 440 A1**
(43) Date of publication of application: **02.05.2007**
(21) Application number: 05741531.7
(22) Date of filing: 18.05.2005
(51) Int. Cl.: F16F 15/02, F16F 15/023, F25B 9/14

(54) **VIBRATION CONTROLLER AND STIRLING ENGINE HAVING THE SAME**

(30) Priority: 02.08.2004 JP 2004225964
(71) Applicant: SHARP KABUSHIKI KAISHA, Osaka-shi, Osaka 545-8522 (JP)
(72) Inventor: INOSHIRI, Ryoh, Nara-shi, Nara 630-8141 (JP)
(74) Representative: Brown, Kenneth Richard
(86) International application number: PCT/JP2005/009060
(87) International publication number: WO 2006/013666

(57) **Abstract**

A vibration suppression apparatus (10A) includes a leaf spring (30) having one end connected to one end in the vibrating direction of a Stirling refrigerator (100) which is a reciprocating motion apparatus, a balance mass (20) connected to the other end of the leaf spring (30), and a damper (40) including a damping body (42) connected to the balance mass (20) and vibrating in phase with the balance mass (20). With this structure, the high-performance vibration suppression apparatus including the elastic body and the damper can be manufactured with a small size and at a low cost.

## Description

### Technical Field

The present invention relates to a vibration suppression apparatus for a reciprocating motion apparatus typified for example by a Stirling engine or the like that generates vibrations chiefly in one direction in operation, and relates to a Stirling engine having the vibration suppression apparatus.

### Background Art

A reciprocating motion apparatus typified by a gas compressor or the like that is structured to allow a piston which is a reciprocating motion member to move to and fro within a cylinder generates, due to the reciprocating motion of the reciprocating motion member, large vibrations of the reciprocating motion apparatus itself in the same direction as the direction in which the reciprocating motion member moves to and fro. The vibrations of the reciprocating motion apparatus cause not only noise but also degradation in reliability of the product itself. Therefore, it is desirable to suppress vibrations as much as possible.

In the following, as a reciprocating motion apparatus, a Stirling refrigerator is illustrated and described that is an application of the Stirling engine.

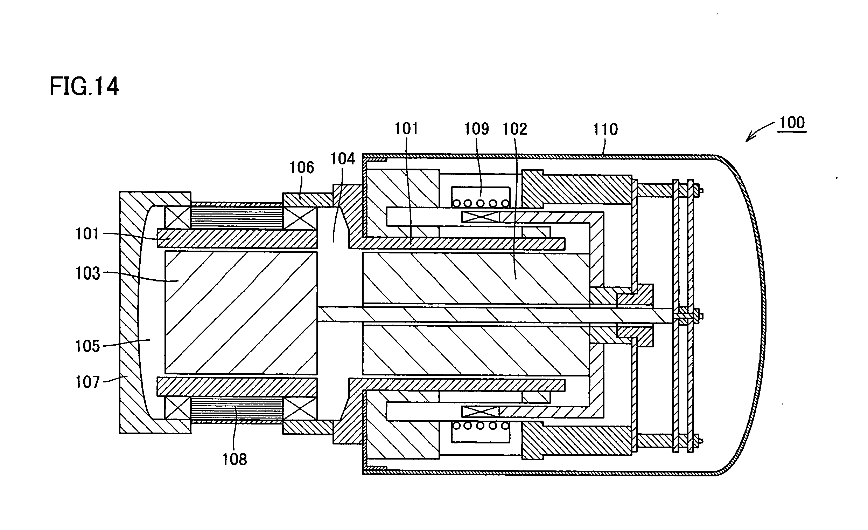

Fig. 14 is a schematic cross-sectional view of a general Stirling refrigerator. Stirling refrigerator 100 shown in Fig. 14 is generally called free-piston type Stirling refrigerator and has a casing 110, a cylinder 101 provided in the casing and filled with such a working gas as helium gas or nitrogen gas, and two pistons within the cylinder. One of the pistons is called power piston 102 that is a reciprocating motion member driven by a linear motor 109 serving as a drive source. The other piston is called displacer 103 that is a reciprocating motion member subjected to variation in pressure of the working gas due to to-and-fro motion of power piston 102 within cylinder 101, thereby moving to and fro within cylinder 101.

On the outside of respective ends in the direction of the to-and-fro motion of displacer 103 within cylinder 101, a compression space 104 and an expansion space 105 are located respectively. Compression space 104 has its boundary defined by power piston 102 and displacer 103 and is enclosed by a radiator 106. Radiator 106 is used for removing compression heat generated in compression space 104. Expansion space 105 has its boundary defined by displacer 103 and a closing end of cylinder 101 and is enclosed by a heat absorber 107. Heat absorber 107 is used for taking out cold energy generated in expansion space 105. These compression space 104 and expansion space 105 communicate with each other through a regenerator 108 disposed on a flow passage of the working gas that is provided on the outside of cylinder 101.

As linear motor 109 drives power piston 102, power piston 102 moves toward compression space 104 and thereby compresses the working gas in compression space 104. The compressed working gas moves through regenerator 108 to expansion space 105. The working gas flowing into expansion space 105 expands as displacer 103 moves toward compression space 104. As the pressure accordingly decreases, the temperature of the working gas in expansion space 105 also decreases. By repetition of this operation cycle, cryogenic temperatures are produced at heat absorber 104.

In such a Stirling refrigerator as described above, the power piston and the displacer reciprocate with a predetermined phase difference therebetween. Therefore, large vibrations occur at the Stirling refrigerator itself. In order to reduce the vibrations, it is necessary to cancel an inertial force generated in association with the reciprocating motion and a force generated in association with variation in pressure. Accordingly, it is necessary to use a vibration suppression apparatus structured by combining an elastic body, a damper and a mass member for example. As a Stirling refrigerator having such a vibration suppression apparatus as described above, a Stirling refrigerator is disclosed for example in Japanese Utility Model Laying-Open No. 5-47760 (Patent Document 1) and a Stirling refrigerator is disclosed for example in Japanese Patent Laying-Open No. 2000-2296 (Patent Document 2).
Patent Document 1: Japanese Utility Model Laying-Open No. 5-47760
Patent Document 2: Japanese Patent Laying-Open No. 2000-2296

### Disclosure of the Invention

### Problems to be Solved by the Invention

The above-described free-piston type Stirling refrigerator has the problem that, as the temperature of the cold energy taken out from the expansion space decreases, the resonance frequency of the piston deviates from the operating frequency of the piston. Further, since increased high-frequency components are included, there are many frequency peaks that cannot be cancelled by a vibration suppression apparatus adjusted to cancel a certain specific resonance frequency. These frequency components cause the phenomenon that the vibration suppression apparatus itself vibrates to a large extent.

For suppressing this vibration phenomenon as well, it is necessary to provide the vibration suppression apparatus with a complicated structure in order that the vibrations of the vibration suppression apparatus itself can be suppressed. Thus, an increase in size of the apparatus as well as an increase in manufacturing cost are unavoidable. In order to solve this problem, it is indispensable to incorporate a damper in the apparatus.

However, since the damper is highly expensive and large in size, the damper is very difficult to incorporate in the vibration suppression apparatus. For example, although Patent Document 2 as referenced above discloses suppression of vibrations of the Stirling refrigerator by means of a vibration suppression apparatus in which a damper is incorporated, it does not disclose how the damper is actually incorporated.

Therefore, the prevent invention is made to solve the above-described problems. An object of the present invention is to provide a high-performance vibration suppression apparatus that includes an elastic body and a damper and that can be manufactured with a small size and at a low cost, and to provide a Stirling engine having the vibration suppression apparatus.

### Means for Solving the Problems

A vibration suppression apparatus according to a first aspect of the present invention is connected to a reciprocating motion apparatus including a reciprocating motion member performing reciprocating motion, suppresses vibrations of the reciprocating motion apparatus that are caused due to the reciprocating motion performed by the reciprocating motion member, and includes: an elastic body having one end connected to one end in the direction of the vibrations of the reciprocating motion apparatus; a mass member connected to the other end of the elastic body; and a damping unit including a damping body connected to the mass member and vibrating in phase with the mass member.

With this structure, the damping unit can be incorporated integrally into the vibration suppression apparatus. Thus, the high-performance vibration suppression apparatus having both of the vibration suppressing action by the elastic force of the elastic body and the vibration suppressing action derived from the damping force of the damping unit can be manufactured with a small size and at a low cost.

Preferably, in the vibration suppression apparatus according to the first aspect of the present invention, the damping unit includes a container housing the damping body and a fluid filling the inside of the container.

With this structure, when the damping body operating together with the mass member moves while displacing the fluid, the resistance of the fluid produces the damping force. Therefore, without use of a complicatedly structured and expensive damping unit, the damping unit having a simple structure that can be inexpensively manufactured can be provided.

Preferably, the vibration suppression apparatus according to the first aspect of the present invention further includes a surface area adjustment mechanism capable of variably adjusting a surface area of the damping body.

With this structure, the surface area of the damping body in the vibrating direction can be adjusted variably. Thus, the damping force produced by the damping unit can be adjusted to various levels.

Preferably, the vibration suppression apparatus according to the first aspect of the present invention further includes: a vibration state detection unit detecting a state of vibrations of the reciprocating motion apparatus; and a control unit controlling the surface area adjustment mechanism based on information about vibrations of the reciprocating motion apparatus detected by the vibration state detection unit.

With this structure, while the reciprocating motion apparatus is operating, the damping force produced by the damping unit can be adjusted to various levels according to the state of vibrations of the reciprocating motion apparatus. Therefore, vibrations of the reciprocating motion apparatus that vary from moment to moment can effectively be reduced.

A vibration suppression apparatus according to a second aspect of the present invention is connected to a reciprocating motion apparatus including a reciprocating motion member performing reciprocating motion, suppresses vibrations of the reciprocating motion apparatus that are caused due to the reciprocating motion performed by the reciprocating motion member, and includes: an elastic body having one end connected to one end in the direction of the vibrations of the reciprocating motion apparatus; a mass member connected to the other end of the elastic body; a container housing the mass member; and a fluid filling the inside of the container.

With this structure, the vibration suppressing action by the elastic force obtained by connecting the mass member to the reciprocating motion apparatus via the elastic body and the vibration suppressing action derived from the damping force of the damping unit structured by housing the mass member in the container filled with the fluid can be achieved simultaneously. In this structure, a damping body housed in the container is not separately provided and instead, the mass member is used. Thus, the number of components is reduced and the structure is simplified. Accordingly, the high-performance vibration suppression apparatus can be manufactured with a small size and at a low cost.

A vibration suppression apparatus according to a third aspect of the present invention is connected to a reciprocating motion apparatus including a reciprocating motion member performing reciprocating motion, suppresses vibrations of the reciprocating motion apparatus that are caused due to the reciprocating motion performed by the reciprocating motion member, and includes: a leaf spring having one end connected to one end in the direction of the vibrations of the reciprocating motion apparatus; a mass member connected to the other end of the leaf spring; and a damping unit disposed between the mass member and the leaf spring and structured to be sandwiched and compressed on its opposing sides by the leaf spring and the mass member and thereby exhibit a damping capability when the vibrations occur.

With this structure, the damping unit can be incorporated integrally into the vibration suppression apparatus. Thus, the high-performance vibration suppression apparatus having both of the vibration suppressing action by the elastic force of the elastic body and the vibration suppressing action derived from the damping force of the damping unit can be manufactured with a small size and at a low cost.

Preferably, in the vibration suppression apparatus according the third aspect of the present invention, the leaf spring includes an outer periphery portion connected to the reciprocating motion apparatus, an inner periphery portion connected to the mass member and an arm portion coupling the outer periphery portion and the inner periphery portion and exhibiting an elastic capability. In this case, preferably the damping unit is attached to a substantially central part of the arm portion extending from the outer periphery portion to the inner periphery portion of the leaf spring, or the damping unit is attached to the mass member at a position corresponding to a substantially central part of the arm portion extending from the outer periphery portion to the inner periphery portion of the leaf spring.

With this structure, since the effect that the damping unit limits movement of the leaf spring or mass member can be obtained, the damping effect can be achieved with the simple structure.

A vibration suppression apparatus according to a fourth aspect of the present invention is connected to a reciprocating motion apparatus including a reciprocating motion member performing reciprocating motion, suppresses vibrations of the reciprocating motion apparatus that are caused due to the reciprocating motion performed by the reciprocating motion member, and includes: a plurality of leaf springs having one end connected to one end in the direction of the vibrations of the reciprocating motion apparatus; a mass member connected to the other end of the plurality of leaf springs; and a damping unit disposed between one and another of the plurality of leaf springs and structured to be sandwiched and compressed on its opposing sides by the plurality of leaf springs adjacent to each other and thereby exhibit a damping capability when the vibrations occur.

With this structure, the damping unit can be incorporated integrally into the vibration suppression apparatus. Thus, the high-performance vibration suppression apparatus having both of the vibration suppressing action by the elastic force of the elastic body and the vibration suppressing action derived from the damping force of the damping unit can be manufactured with a small size and at a low cost.

Preferably, in the vibration suppression apparatus according to the fourth aspect of the present invention, the leaf springs include an outer periphery portion connected to the reciprocating motion apparatus, an inner periphery portion connected to the mass member and an arm portion coupling the outer periphery portion and the inner periphery portion and exhibiting an elastic capability. In this case, preferably the damping unit is attached to a substantially central part of the arm portion extending from the outer periphery portion to the inner periphery portion of the leaf springs.

With this structure, since the effect that the damping unit limits movement of the leaf springs can be obtained, the damping effect can be achieved with the simple structure.

A vibration suppression apparatus according to a fifth aspect of the present invention is connected to a reciprocating motion apparatus including a reciprocating motion member performing reciprocating motion, suppresses vibrations of the reciprocating motion apparatus that are caused due to the reciprocating motion performed by the reciprocating motion member, and includes: a low-repulsion member having one end connected to one end in the direction of the vibrations of the reciprocating motion apparatus; an elastic body having one end connected to the other end of the low-repulsion member; and a mass member connected to the other end of the elastic body.

With this structure, the damping unit can be incorporated integrally into the vibration suppression apparatus. Thus, the high-performance vibration suppression apparatus having both of the vibration suppressing action by the elastic force of the elastic body and the vibration suppressing action derived from the damping force of the damping unit can be manufactured with a small size and at a low cost.

Regarding the vibration suppression apparatuses according to the third to fifth aspects of the present invention, preferably the damping unit is formed of a low-repulsion member affixed to the leaf spring or the mass member. Further, in this case, preferably the low-repulsion member includes a silicone-based material or urethane-based material as its principal material.

With this structure, the damping unit producing sufficient damping force can be incorporated inexpensively and conveniently into the vibration suppression apparatus.

A Stirling engine according to the present invention includes any of the vibration suppression apparatuses according to the first to fifth aspects of the present invention.

With this structure, the Stirling engine can be provided with remarkably reduced occurrence of vibrations. Therefore, occurrence of noise is also reduced remarkably and the Stirling engine can be of high reliability in terms of that degradation and failure for example are unlikely to occur.

### Effects of the Invention

In accordance with the present invention, a vibration suppression apparatus of high performance that includes an elastic body and a damper and that can be manufactured with a small size and at a low cost as well as a Stirling engine having the vibration suppression apparatus can be provided.

### Brief Description of the Drawings

Fig. 1 is a partial schematic cross-sectional view of a Stirling refrigerator having a vibration suppression apparatus according to a first embodiment of the present invention.
Fig. 2 is a plan view of a leaf spring shown in Fig. 1.
Fig. 3 is a partial schematic cross-sectional view of a Stirling refrigerator having a vibration suppression apparatus according to a second embodiment of the present invention.
Fig. 4A is a plan view of a damper, illustrating operation of a damping body comprised of an upper plate and a lower plate shown in Fig. 3.
Fig. 4B is a plan view of the damper, illustrating operation of the damping body comprised of the upper plate and the lower plate shown in Fig. 3.
Fig. 4C is a plan view of the damper, illustrating operation of the damping body comprised of the upper plate and the lower plate shown in Fig. 3.
Fig. 5 is a partial schematic cross-sectional view of a Stirling refrigerator having a vibration suppression apparatus according to a third embodiment of the present invention.
Fig. 6 shows another exemplary structure of the vibration suppression apparatus according to the third embodiment of the present invention.
Fig. 7 is a partial schematic cross-sectional view of a Stirling refrigerator having a vibration suppression apparatus according to a fourth embodiment of the present invention.
Fig. 8 illustrates the position where a damping body of the vibration suppression apparatus shown in Fig. 7 is attached.
Fig. 9 shows the results of removing a low-repulsion member from the vibration suppression apparatus shown in Fig. 7, operating in this state the Stirling refrigerator, and measuring vibration spectrum when abnormal vibrations occur.
Fig. 10 shows the results of inserting a gel body as the low-repulsion member to the position as shown in Figs. 7 and 8 when abnormal vibrations occur to suppress the abnormal vibrations, and measuring vibration spectrum in this state.
Fig. 11 is a partial schematic cross-sectional view of a Stirling refrigerator having a vibration suppression apparatus according to a fifth embodiment of the present invention.
Fig. 12 illustrates the position where a damping body of the vibration suppression apparatus shown in Fig. 11 is attached.
Fig. 13 is a partial schematic cross-sectional view of a Stirling refrigerator having a vibration suppression apparatus according to a sixth embodiment of the present invention.
Fig. 14 is a schematic cross-sectional view of a general Stirling refrigerator.

### Description of the Reference Signs

10A-10G vibration suppression apparatus, 20 balance mass, 30 leaf spring, 31 outer periphery portion, 32 inner periphery portion, 33 arm portion, 40 damper, 41 chamber, 42 damping body, 42 upper plate, 42a1 opening, 42b lower plate, 42b1 opening, 43 fluid, 47-49 gel body, 50 control unit, 51 vibration state detection unit, 61 rod, 100 Stirling refrigerator, 101 cylinder, 102 piston, 103 displacer, 104 compression space, 105 expansion space, 106 radiator, 107 heat absorber, 108 regenerator, 109 linear motor, 110 casing, 120 adapter, 121 fixture, 122 base portion

### Best Modes for Carrying Out the Invention

In the following, embodiments of the present invention are described with reference to the drawings. In connection with the embodiments illustrated below, as a reciprocating motion apparatus, a Stirling refrigerator that is an application of the Stirling engine is illustrated and described.

### First Embodiment

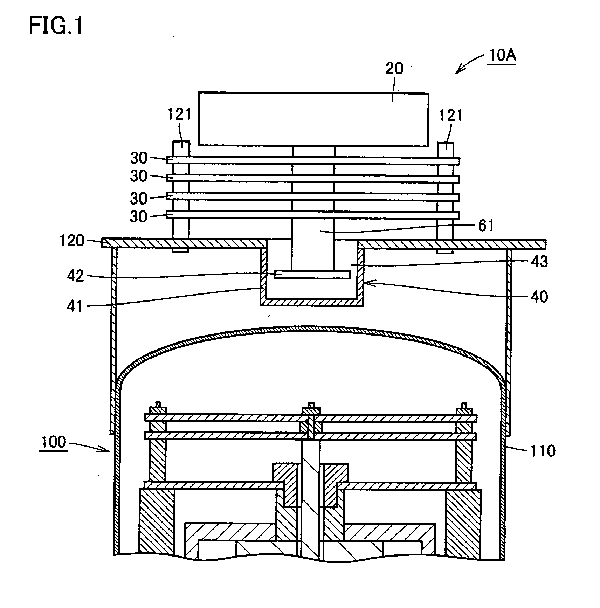

Fig. 1 is a partial schematic cross-sectional view of a Stirling refrigerator having a vibration suppression apparatus in a first embodiment of the present invention. The Stirling refrigerator is structured similarly to the Stirling refrigerator in the above-described conventional example. Therefore, like components are denoted by like reference characters in the drawing and the description thereof is not repeated here.

As shown in Fig. 1, vibration suppression apparatus 10A in the present embodiment is connected to the rear end of a casing 110 of Stirling refrigerator 100 (see Fig. 14 for the internal structure) in which a power piston 102 and a displacer 103 that are reciprocating motion members are inserted coaxially within a cylinder 101. The rear end of casing 110 is located on the side opposite to an absorber 107 (see Fig. 14), and corresponds to one end portion of Stirling refrigerator 100 in the same direction as the direction in which power piston 102 and displacer 103 move to and fro.

As shown in Fig. 1, vibration suppression apparatus 10A is chiefly comprised of a balance mass 20 serving as a mass component, a leaf spring 30 serving as an elastic body and a damper 40 serving as a damping unit. A plurality of (four in illustrated vibration suppression apparatus 10A) leaf springs 30 spaced apart from each other are supported and secured at their outer periphery portions by means of a fixture 121 of an adapter 120 attached to the rear end of casing 110 of Stirling refrigerator 100. Balance mass 20 is supported and secured by means of a rod 61 attached to the inner periphery portion located near a central opening of leaf springs 30. Rod 61 has one end to which balance mass 20 is attached and the other end to which damper 40 is attached.

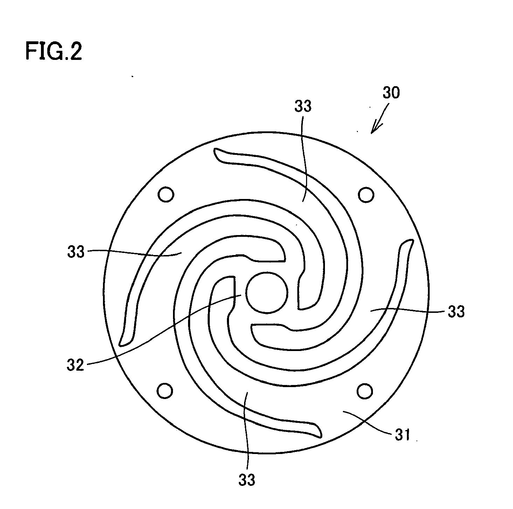

Fig. 2 is a plan view of the leaf spring shown in Fig. 1. As shown in Fig. 2, leaf spring 30 incorporated into vibration suppression apparatus 10A in the present embodiment is a leaf spring formed by cutting out a portion at a predetermined position of a metal plate circular in shape in plan view, and has an outer periphery portion 31 secured by fixture 121 of adapter 120, an inner periphery portion 32 to which rod 61 with balance mass 20 and damper 40 attached thereto is attached, and an arm portion 33 coupling these outer periphery portion 31 and inner periphery portion 32. A plurality of arm portions 33 extend radially from inner periphery portion 32 to outer periphery portion 31, and are components generating an elastic force in the direction crossing the plane of the drawing.

As shown in Fig. 1, damper 40 includes a chamber 41 that is a container provided at a central portion of adapter 120 attached to the rear end of casing 110 of Stirling refrigerator 100, a damping body 42 housed in this chamber 41 and attached to rod 61 described above, and a fluid 43 filling the inside of chamber 41. As fluid 43, air is chiefly used.

In vibration suppression apparatus 10A in the present embodiment, balance mass 20 and damping body 42 of damper 40 are integrally coupled by rod 61. Therefore, balance mass 20 and damping body 42 vibrate in phase. In other words, in the case where Stirling refrigerator 100 operates while balance mass 20 vibrates to cancel vibrations generated at Stirling refrigerator 100, damping body 42 also vibrates as balance mass 20 vibrates. In this case, the vibrations of damper 42 and the vibrations of balance mass 20 are in phase. Therefore, the air that is fluid 43 filling the inside of chamber 41 moves to and fro in the gap between chamber 41 and damping body 42 and the damping effect can be obtained from this portion.

With the structure as described above, the vibration suppression apparatus can be implemented that has both of the vibration suppressing action by the elastic force of the leaf springs and the vibration suppressing action derived from the damping force of the damper. Thus, not only the vibration suppressing effect, produced by the elastic force, on vibrations at a specific frequency but also the vibration suppressing effect, produced by the damping force, on any vibrations in a frequency band having a predetermined width can be obtained. Accordingly, even in the case where the Stirling refrigerator generates vibrations at a high frequency different from the resonant frequency, the vibrations can effectively be suppressed. Further, with the above-described structure, the vibration suppression apparatus of high performance can be manufactured with a small size and at a low cost.

### Second Embodiment

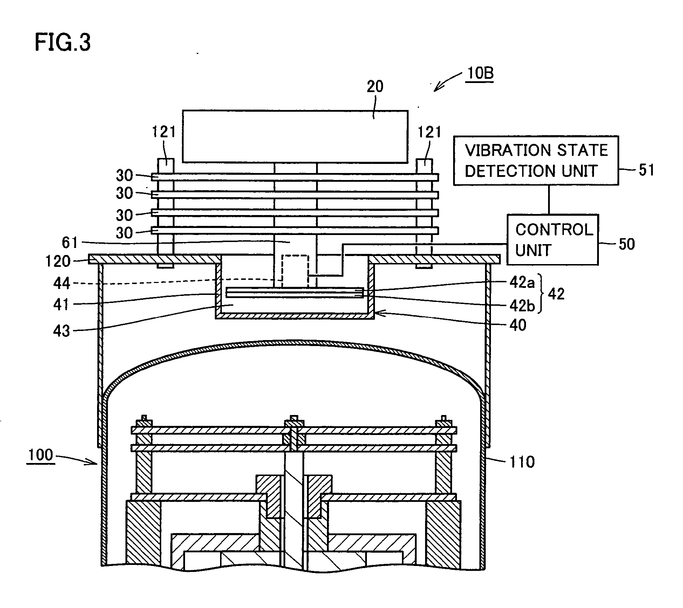

Fig. 3 is a partial schematic cross-sectional view of a Stirling refrigerator having a vibration suppression apparatus in a second embodiment of the present invention. The Stirling refrigerator is structured similarly to the Stirling refrigerator in the above-described conventional example. Therefore, like components are denoted by like reference characters in the drawing and the description thereof is not repeated here. Further, any components similar to those of the vibration suppression apparatus in the first embodiment are denoted by like reference characters in the drawing, and the description thereof is not repeated.

As shown in Fig. 3, vibration suppression apparatus 10B in the present embodiment differs from vibration suppression apparatus 10A in the first embodiment in that damping body 42 housed in chamber 41 is divided into an upper plate 42a and a lower plate 42b. Further, a rotational drive motor 44 is housed within rod 61 and upper plate 42a is attached to the rotational shaft of this rotational drive motor 44. Thus, upper plate 42a is rotatably supported by rotational drive motor 44. Lower plate 42b is unrotatably secured to rod 61. Rotational drive motor 44 is structured so that its rotating motion can be controlled by a control unit 50 and, to control unit 50, a vibration state detection unit 51 detecting a vibration state of Stirling refrigerator 100 is connected.

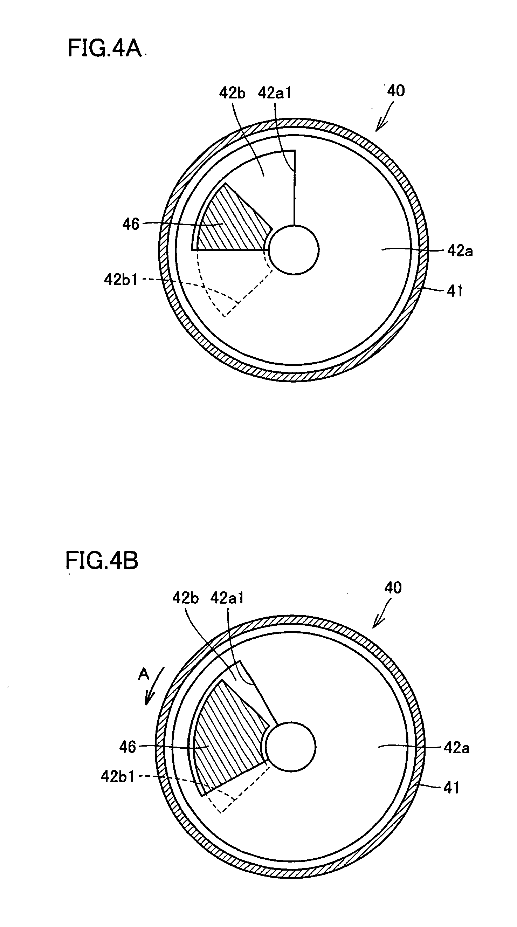

Figs. 4A to 4C are each a plan view of the damper for illustrating operation of the damping body comprised of the upper plate and the lower plate as described above. As shown in Fig. 4A, upper plate 42a and lower plate 42b have respective openings 42a1 and 42b1, and openings 42a1 and 42b1 have respective regions overlapping each other. In the region where openings 42a1 and 42b1 overlap each other, a communication passage 46 extending through damping body 42 in the up-and-down direction is formed. Therefore, in this portion, an upper space (the space closer to balance mass 20 relative to damping body 42) and a lower space (the space closer to Stirling refrigerator 100 relative to damping body 42) in chamber 41 communicate with each other.

As described above, upper plate 42a is rotatably supported by rotational drive motor 44. Therefore, based on a signal from control unit 50, rotational drive motor 44 drives upper plate 42a and thereby rotate upper plate 42a to a predetermined extent. Based on a signal from vibration state detection unit 51 detecting a vibration state of Stirling refrigerator 100, control unit 50 controls operation of rotational drive motor 44 and controls an opening area of communication passage 46 so that vibrations caused by operation of Stirling refrigerator 100 are cancelled.

More specifically, in the case where there arises the necessity to reduce the damping force, upper plate 42a in the state shown in Fig. 4A is rotated as shown in Fig. 4B to a predetermined extent in the direction indicated by an arrow A shown in Fig. 4B, thereby increasing the opening cross-sectional area of communication passage 46. In this way, the surface area of damping body 42 decreases, the flow in/out quantity of fluid 43 that fills chamber 41 increases, and the effect of damping is lessened.

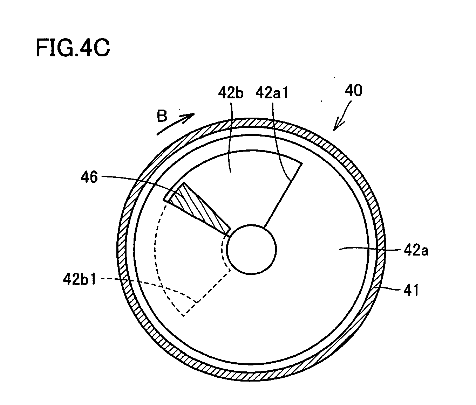

On the contrary, in the case where there arises the necessity to increase the damping force, upper plate 42a in the state shown in Fig. 4A is rotated as shown in Fig. 4C to a predetermined extent in the direction indicated by an arrow B shown in Fig. 4C, thereby decreasing the opening cross-sectional area of communication passage 46. In this way, the surface area of damping body 42 increases, the flow in/out quantity of fluid 43 filling chamber 41 decreases, and the effect of damping is enhanced.

As seen from the above, upper plate 42a, lower plate 42b and rotational drive motor 44 function as a surface-area adjustment mechanism that variably adjusts the surface area of damping body 42. Therefore, the damping force obtained from damper 40 can easily be adjusted.

With the above-described structure, in addition to the effects of the first embodiment as described above, the damping force generated by the damper while the Stirling refrigerator is operating can be adjusted to various levels according to the vibration state of the Stirling refrigerator, so that vibrations of the Stirling refrigerator that vary from moment to moment can effectively be reduced.

### Third Embodiment

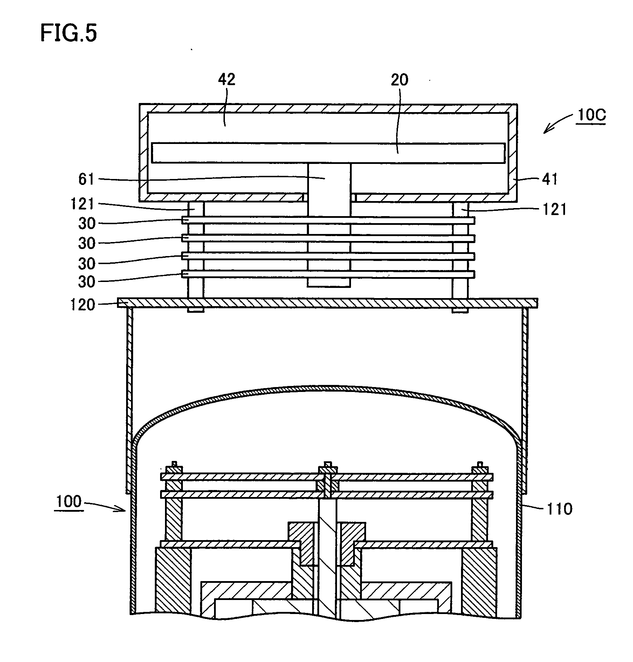

Fig. 5 is a partial schematic cross-sectional view of a Stirling refrigerator having a vibration suppression apparatus in a third embodiment of the present invention. The Stirling refrigerator is structured similarly to the Stirling refrigerator in the above-described conventional example. Therefore, like components are denoted by like reference characters in the drawing and the description thereof is not repeated here. Further, any components similar to those of the vibration suppression apparatus in the first embodiment are denoted by like reference characters in the drawing, and the description thereof is not repeated.

As shown in Fig. 5, vibration suppression apparatus 10C in the present embodiment differs from vibration suppression apparatus 10A in the first embodiment in that chamber 41 is attached to the head of fixture 121 of adapter 120 attached to the rear end of casing 110 of Stirling refrigerator 100. Chamber 41 is provided to enclose balance mass 20, and fluid 42 fills the inside of chamber 41. In other words, damper 40 serving as a damping unit is comprised of balance mass 20, chamber 41 housing balance mass 20 and fluid 43 filling the inside of chamber 41.

With the structure as described above, the vibration suppression apparatus can simultaneously provide the vibration suppressing action by the elastic force obtained by connecting the balance mass to the Stirling refrigerator via the leaf springs and the vibration suppressing action derived from the damping force of the damper structured by housing the balance mass in the chamber filled with air. Thus, not only the vibration suppressing effect, produced by the elastic force, on vibrations at a specific frequency but also the vibration suppressing effect, produced by the damping force, on any vibrations in a frequency band having a predetermined width can be obtained. Accordingly, even in the case where the Stirling refrigerator generates vibrations at a high frequency different from the resonant frequency, the vibrations can effectively be suppressed.

Moreover, with the above-described structure, since the balance mass and the damping body that are separately provided in the first embodiment can be replaced with a common component, the number of components can be reduced and the structure is simplified. Therefore, the vibration suppression apparatus of high performance can be manufactured with a small size and at a low cost.

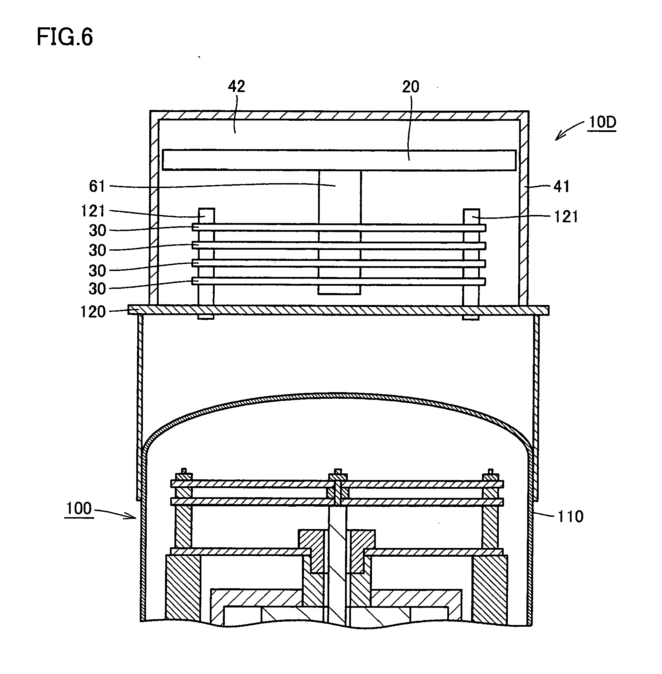

Fig. 6 shows another exemplary structure of the vibration suppression apparatus in the present embodiment. As shown in Fig. 6, vibration suppression apparatus 10D in the present embodiment is structured in the manner that chamber 41 is attached to adapter 120 itself, instead of being attached to fixture 121 of adapter 120 (see Fig. 5). In the case where the apparatus is structured in this way, the following effect is achieved in addition to the above-described effects. Specifically, since leaf springs 30 and rod 61 for example are protected by chamber 41, damages and the like of these internal components are prevented.

Further, in vibration suppression apparatuses 10C, 10D in the present embodiment, the balance mass serving as the damping body may be divided into two sections, openings may be formed in the balance mass sections respectively to superpose the openings on each other, and one of the sections may be rotatably driven by a rotational drive motor or the like as the above-described second embodiment. Thus, the surface area of the balance mass serving as the damping body can appropriately be adjusted and vibrations of the Stirling refrigerator that vary from moment to moment can effectively be reduced.

### Fourth Embodiment

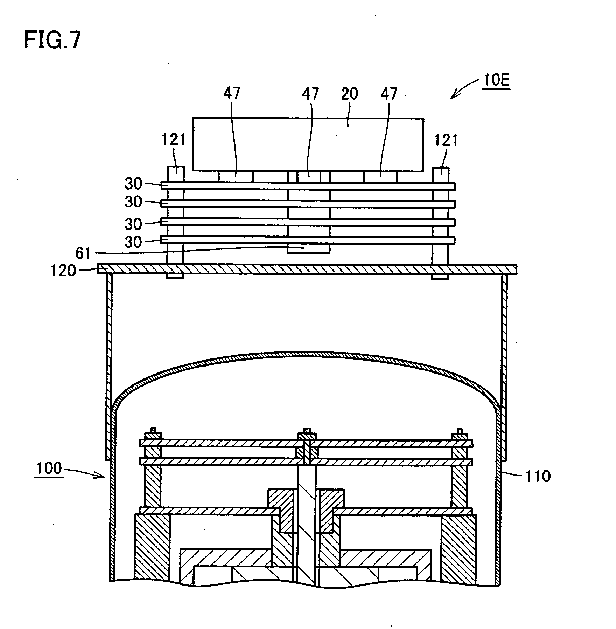

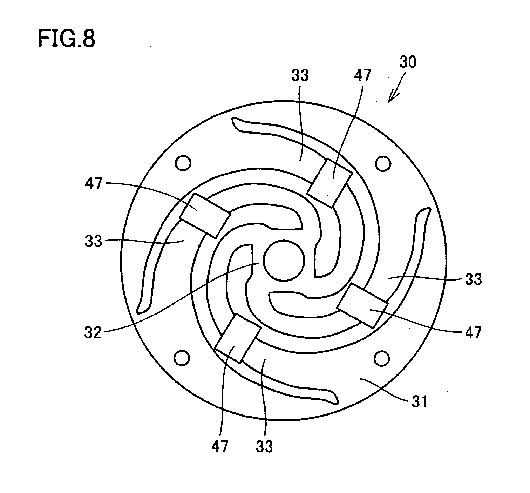

Fig. 7 is a partial schematic cross-sectional view of a Stirling refrigerator having a vibration suppression apparatus in a fourth embodiment of the present invention. Fig. 8 illustrates the position where a damping body is attached in the vibration suppression apparatus shown in Fig. 7. The Stirling refrigerator is structured similarly to the Stirling refrigerator in the above-described conventional example. Therefore, like components are denoted by like reference characters in the drawing and the description thereof is not repeated here. Further, any components similar to those of the vibration suppression apparatuses in the first to third embodiments are denoted by like reference characters in the drawing, and the description thereof is not repeated.

As shown in Fig. 7, vibration suppression apparatus 10E in the present embodiment does not have damper 40 used for vibration suppression apparatuses 10A to 10D illustrated in the above-described first to third embodiments. Instead, as the damping body, a gel body 47 is provided that is a low-repulsion member whose principal material is a silicon-based material or urethane-based material. Here, the low-repulsion member typified by the gel body refers to the one having the property of receiving an applied impact by its whole surface and absorbing the impact. Since the ability to absorb the impact increases in proportion to the speed, the damping effect can be obtained.

In vibration suppression apparatus 10E in the present embodiment, this gel body 47 is attached to a surface of one of a plurality of layered leaf springs 30 that is located closest to balance mass 20 as shown in Fig. 7. More specifically, as shown in Fig. 8, gel body 47 is affixed to a central portion of arm portion 33 extending from outer periphery portion 31 to inner periphery portion 32 of leaf spring 30 located closest to balance mass 20. Arm portion 33 to which this gel body 47 is affixed is at a position where leaf spring 30 vibrates. Therefore, when gel body 47 is sandwiched and compressed, on its opposing sides, between balance mass 20 and leaf spring 30 while vibrations occur, the damping effect is produced by gel body 47.

With the structure as described above, the vibration suppression apparatus can be implemented that has both of the vibration suppressing action by the elastic force of the leaf springs and the vibration suppressing action derived from the damping force of the gel body. Thus, not only the vibration suppressing effect, produced by the elastic force, on vibrations at a specific frequency but also the vibration suppressing effect, produced by the damping force, on any vibrations in a frequency band having a predetermined width can be obtained. Accordingly, even in the case where the Stirling refrigerator generates vibrations at a high frequency different from the resonant frequency, the vibrations can effectively be suppressed. Further, with the above-described structure, the vibration suppression apparatus of high performance can be manufactured with a small size and at a low cost.

The reason why the central portion of the arm portion of the leaf spring is an appropriate position where the gel body is to be attached is as follows. At the central portion of the arm portion, the distance between the leaf spring and the balance mass changes to the greatest degree and thus movement of the leaf spring or balance mass is easily limited. In other words, in the vicinity of the outer periphery portion of the leaf spring, movement of the leaf spring is smaller relative to the central portion. Further, in the vicinity of the inner periphery portion, the distance between the leaf spring and the balance mass changes to a smaller degree relative to the central portion. Therefore, in these portions, the movement of the leaf spring or balance mass would be difficult to limit.

Further, in the above-described structure, the size, thickness or material for example of the low-repulsion member typified by the gel body can be changed to adjust the magnitude of the resultant damping force to various levels. For example, silicon gel or soft urethane gel can be used as the gel body for changing the characteristics so as to appropriately adjust the resultant damping force.

Furthermore, in the above-described structure, the low-repulsion member may be attached to the balance mass. In this case, it is effective to affix the low-repulsion member to a surface of the balance mass at the position corresponding to the central portion of the arm portion extending from the outer periphery portion to the inner periphery portion of the leaf spring.

In addition, it is not always necessary that the low-repulsion member is sandwiched between the leaf spring and the balance mass even when the Stirling refrigerator does not operate. In other words, while the Stirling refrigerator does not operate, it is unnecessary that the low-repulsion member contacts both of the leaf spring and the balance mass. The above-described damping effect is an effect produced at least while the Stirling refrigerator operates, by the fact that the low-repulsion member is sandwiched and compressed on its opposing sides between the leaf spring and the balance mass while the leaf spring vibrates.

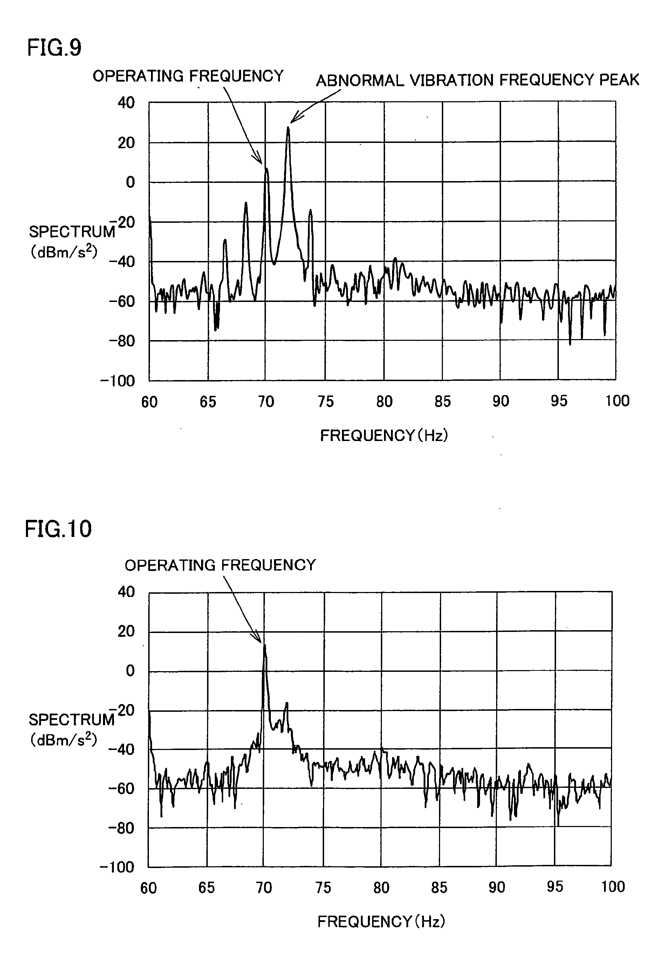

Figs. 9 and 10 are graphs illustrating the effects obtained by attaching the vibration suppression apparatus to the Stirling refrigerator in the present embodiment. Fig. 9 shows the results of removing the low-repulsion member from the vibration suppression apparatus shown in Fig. 7, operating in this state the Stirling refrigerator, and measuring vibration spectrum when abnormal vibrations occur. In contrast, Fig. 10 shows the results of operating the Stirling refrigerator in similar conditions, inserting a gel body as the low-repulsion member to the position as shown in Figs. 7 and 8 when abnormal vibrations occur to suppress the abnormal vibrations, and measuring vibration spectrum in this state.

As shown in Fig. 9, when abnormal vibrations of the Stirling refrigerator occur, a plurality of abnormal vibration frequency peaks are generated in addition to the vibration peak of the same frequency as the operating frequency, including an abnormal vibration frequency peak of a spectrum higher than the spectrum of the operating frequency. The difference between the abnormal vibration frequency and the operating frequency causes beat, thereby considerably increasing vibrations of the Stirling refrigerator body as well as noise generated due to the vibrations.

However, as shown in Fig. 10, the gel body that is a low-repulsion member may be inserted between the leaf spring and the balance mass so as to keep low the spectrum of the abnormal vibration frequency and eliminate any frequency peak higher than the operating frequency. It is seen that, as a result, generation of beat is suppressed. From these results, it can be understood that the vibration suppression apparatus may be structured as the present embodiment so as to remarkably suppress occurrence of abnormal vibrations.

### Fifth Embodiment

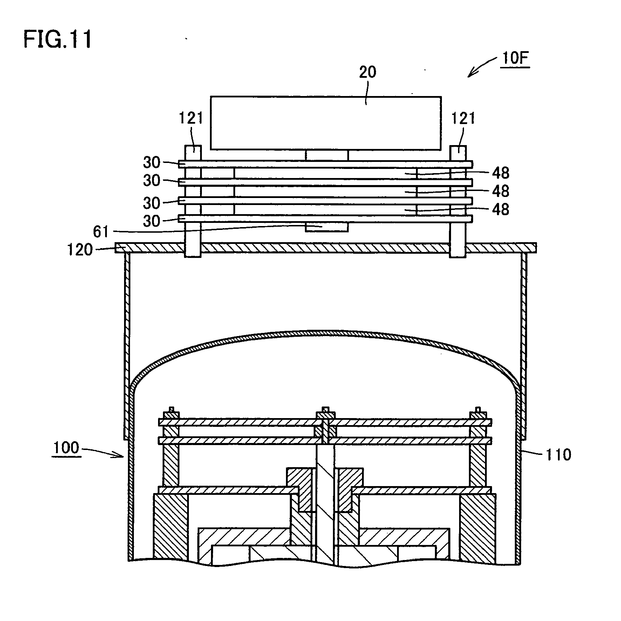

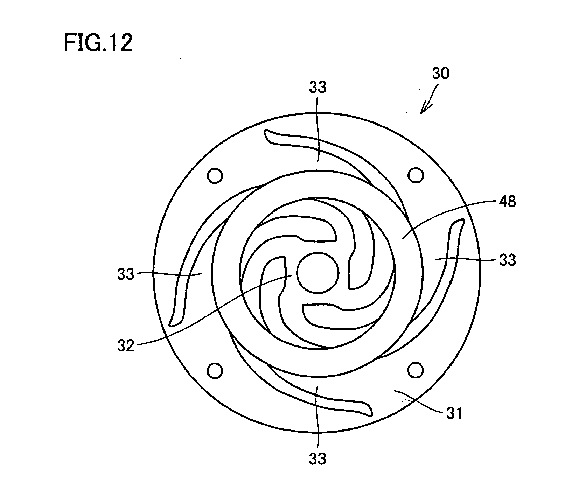

Fig. 11 is a partial schematic cross-sectional view of a Stirling refrigerator having a vibration suppression apparatus in a fifth embodiment of the present invention. Fig. 12 illustrates the position where a damping body is attached in the vibration suppression apparatus shown in Fig. 11. The Stirling refrigerator is structured similarly to the Stirling refrigerator in the above-described conventional example. Therefore, like components are denoted by like reference characters in the drawing and the description thereof is not repeated here. Further, any components similar to those of the vibration suppression apparatus in the fourth embodiment are denoted by like reference characters in the drawing, and the description thereof is not repeated.

As shown in Fig. 11, vibration suppression apparatus 10F in the present embodiment differs from vibration suppression apparatus 10E illustrated in the above-described fourth embodiment in that a gel body 48 that is a low-repulsion member is attached between a plurality of layered leaf springs 30 instead of being provided between leaf spring 30 and balance mass 20. More specifically, except for the leaf spring located closest to balance mass 20, the leaf springs have, at a central portion of arm portion 30 extending from outer periphery portion 31 to inner periphery portion 32 of the leaf spring, gel body 48 that is affixed in the shape of a ring (see Fig. 12). Since arm portion 33 to which this gel body 48 is affixed is at a position where leaf spring 30 vibrates, gel body 48 produces the damping effect when gel body 48 is sandwiched and compressed between balance mass 20 and leaf spring 30 while vibrations occur.

With the structure as well, similar effects to those of the fourth embodiment can be obtained. As the fourth embodiment, it is not always necessary that the low-repulsion member is sandwiched between leaf springs which are adjacent to each other even when the Stirling refrigerator does not operate. In other words, while the Stirling refrigerator does not operate, it is unnecessary that the low-repulsion member contacts both of the leaf springs adjacent to each other. The damping effect is sufficiently produced on the condition that, at least while the Stirling refrigerator operates, the low-repulsion member is sandwiched and compressed between the leaf springs adjacent to each other while the leaf spring vibrates.

### Sixth Embodiment

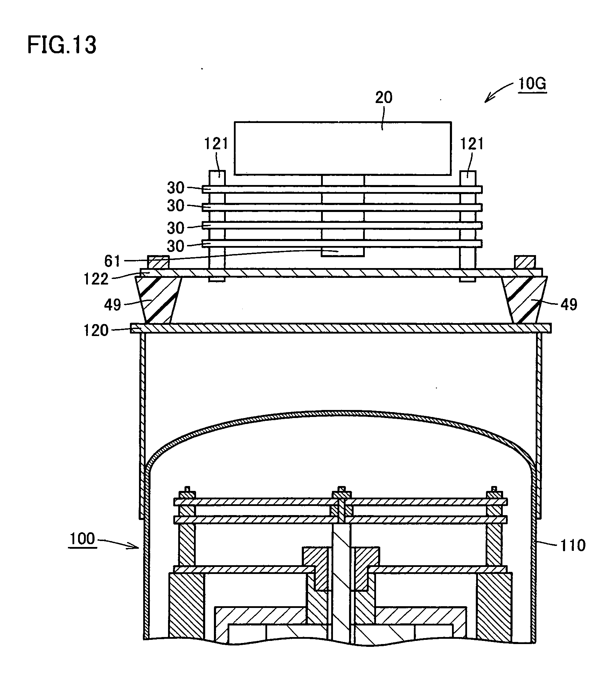

Fig. 13 is a partial schematic cross-sectional view of a Stirling refrigerator having a vibration suppression apparatus in a sixth embodiment of the present invention. The Stirling refrigerator is structured similarly to the Stirling refrigerator in the above-described conventional example. Therefore, like components are denoted by like reference characters in the drawing and the description thereof is not repeated here.

As shown in Fig. 13, vibration suppression apparatus 10G in the present embodiment is chiefly comprised of balance mass 20 serving as a mass member, leaf spring 30 serving as an elastic body and a gel body 49 that is a low-repulsion member serving as a damping unit. On the rear end of casing 110 of Stirling refrigerator 100, adapter 120 is attached. To this adapter 120, one end of gel body 49 is attached. To the other end of gel body 49, a base portion 122 of fixture 121 supporting a plurality of leaf springs 30 spaced apart from each other is attached. Leaf springs 30 are supported and secured by fixture 121 at the outer periphery portion. Balance mass 20 is supported and secured by rod 61 attached to an inner periphery portion located in the vicinity of a central opening of leaf springs 30. In other words, leaf springs 30 serving as the elastic body and Stirling refrigerator 100 that is a reciprocating motion apparatus are connected by gel body 49 serving as the damping unit.

With the structure as described above, the vibration suppression apparatus can be implemented that has both of the vibration suppressing action by the elastic force of the leaf springs and the vibration suppressing action derived from the damping force of the gel body. Thus, not only the vibration suppressing effect, produced by the elastic force, on vibrations at a specific frequency but also the vibration suppressing effect, produced by the damping force, on any vibrations in a frequency band having a predetermined width can be obtained. Accordingly, even in the case where the Stirling refrigerator generates vibrations at a high frequency different from the resonant frequency, the vibrations can effectively be suppressed. Further, with the above-described structure, the vibration suppression apparatus of high performance can be manufactured with a small size and at a low cost.

Moreover, without disassembling the reciprocating vibration unit comprised of the leaf springs and the balance mass for example, the gel body may be replaced with a damping unit having a different damping force, or the reciprocating vibration unit may be replaced with the one having a different resonance frequency. Accordingly, the effect that components of the vibration suppression apparatus can be replaced very easily can be obtained.

In connection with the first to sixth embodiments described above, the Stirling refrigerator is illustrated and described as a reciprocating motion apparatus whose vibrations are to be suppressed. However, the present invention is not limited to such an application and is applicable to any apparatus that generates vibrations chiefly in one direction. Further, the characteristic features illustrated in the above-described embodiments can be combined with each other.

It should be apparent that the foregoing embodiments disclosed herein are by way of illustration and example in any respects, not to be taken by way of limitation. The technical scope of the present invention is defined by claims and covers all variations and modifications in the meaning and range equivalent to the claims.

## Claims

1. A vibration suppression apparatus connected to a reciprocating motion apparatus including a reciprocating motion member performing reciprocating motion, and suppressing vibrations of said reciprocating motion apparatus that are caused due to the reciprocating motion performed by said reciprocating motion member, comprising:
an elastic body (30) having one end connected to one end in the direction of said vibrations of said reciprocating motion apparatus;
a mass member (20) connected to the other end of said elastic body (30); and
a damping unit (40) including a damping body (42) connected to said mass member (20) and vibrating in phase with said mass member (20).

2. The vibration suppression apparatus according to claim 1, wherein
said damping unit (40) includes a container (41) housing said damping body (42) and a fluid (43) filling the inside of said container (41).

3. The vibration suppression apparatus according to claim 2, further comprising a surface area adjustment mechanism (42a, 42b, 44) capable of variably adjusting a surface area of said damping body (42).

4. The vibration suppression apparatus according to claim 3, further comprising:
a vibration state detection unit (51) detecting a state of vibrations of said reciprocating motion apparatus; and
a control unit (50) controlling said surface area adjustment mechanism (42a, 42b, 44) based on information about vibrations of said reciprocating motion apparatus detected by said vibration state detection unit (51).

5. A Stirling engine comprising the vibration suppression apparatus as recited in claim 1.

6. A vibration suppression apparatus connected to a reciprocating motion apparatus including a reciprocating motion member performing reciprocating motion, and suppressing vibrations of said reciprocating motion apparatus that are caused due to the reciprocating motion performed by said reciprocating motion member, comprising:
an elastic body (30) having one end connected to one end in the direction of said vibrations of said reciprocating motion apparatus;
a mass member (20) connected to the other end of said elastic body (30);
a container (41) housing said mass member (20); and
a fluid (42) filling the inside of said container (41).

7. A Stirling engine comprising the vibration suppression apparatus as recited in claim 6.

8. A vibration suppression apparatus connected to a reciprocating motion apparatus including a reciprocating motion member performing reciprocating motion, and suppressing vibrations of said reciprocating motion apparatus that are caused due to the reciprocating motion performed by said reciprocating motion member, comprising:
a leaf spring (30) having one end connected to one end in the direction of said vibrations of said reciprocating motion apparatus;
a mass member (20) connected to the other end of said leaf spring (30); and
a damping unit (47) disposed between said mass member (20) and said leaf spring (30) and structured to be sandwiched and compressed on its opposing sides by said leaf spring (30) and said mass member (20) and thereby exhibit a damping capability when said vibrations occur.

9. The vibration suppression apparatus according to claim 8, wherein
said leaf spring (30) includes an outer periphery portion (31) connected to said reciprocating motion apparatus, an inner periphery portion (32) connected to said mass member (20) and an arm portion (33) coupling said outer periphery portion (31) and said inner periphery portion (32) and exhibiting an elastic capability, and
said damping unit (47) is attached to the mass member (20) at a position corresponding to a substantially central part of said arm portion (33) extending from said outer periphery portion (31) to said inner periphery portion (32) of said leaf spring (30).

10. The vibration suppression apparatus according to claim 8, wherein
said leaf spring (30) includes an outer periphery portion (31) connected to said reciprocating motion apparatus, an inner periphery portion (32) connected to said mass member (20) and an arm portion (33) coupling said outer periphery portion (31) and said inner periphery portion (32) and exhibiting an elastic capability; and
said damping unit (47) is attached to a substantially central part of said arm portion (33) extending from said outer periphery portion (31) to said inner periphery portion (32) of said leaf spring (30).

11. The vibration suppression apparatus according to claim 8, wherein
said damping unit (47) is formed of a low-repulsion member affixed to said leaf spring (3) or said mass member (20).

12. A Stirling engine comprising the vibration suppression apparatus as recited in claim 8.

13. A vibration suppression apparatus connected to a reciprocating motion apparatus including a reciprocating motion member performing reciprocating motion, and suppressing vibrations of said reciprocating motion apparatus that are caused due to the reciprocating motion performed by said reciprocating motion member, comprising:
a plurality of leaf springs (30) having one end connected to one end in the direction of said vibrations of said reciprocating motion apparatus;
a mass member (20) connected to the other end of said plurality of leaf springs (30); and
a damping unit (48) disposed between one and another of said plurality of leaf springs (30) and structured to be sandwiched and compressed on its opposing sides by said plurality of leaf springs (30) adjacent to each other and thereby exhibit a damping capability when said vibrations occur.

14. The vibration suppression apparatus according to claim 13, wherein
said leaf springs (30) include an outer periphery portion (31) connected to said reciprocating motion apparatus, an inner periphery portion (32) connected to said mass member (20) and an arm portion (33) coupling said outer periphery portion (31) and said inner periphery portion (32) and exhibiting an elastic capability, and
said damping unit (48) is attached to a substantially central part of said arm portion (33) extending from said outer periphery portion (31) to said inner periphery portion (32) of said leaf springs (30).

15. The vibration suppression apparatus according to claim 13, wherein
said damping unit (48) is formed of a low-repulsion member affixed to said leaf springs (30).

16. A Stirling engine comprising the vibration suppression apparatus as recited in claim 13.

17. A vibration suppression apparatus connected to a reciprocating motion apparatus including a reciprocating motion member performing reciprocating motion, and suppressing vibrations of said reciprocating motion apparatus that are caused due to the reciprocating motion performed by said reciprocating motion member, comprising:
a low-repulsion member (49) having one end connected to one end in the direction of said vibrations of said reciprocating motion apparatus;
an elastic body (30) having one end connected to the other end of said low-repulsion member (49); and
a mass member (20) connected to the other end of said elastic body (30).

18. A Stirling engine comprising the vibration suppression apparatus as recited in claim 17.
